# EUROPÄISCHE PATENTSCHRIFT

(11) **EP 3 574 967 B1**
(45) Veröffentlichungstag und Bekanntmachung des Hinweises auf die Patenterteilung: **16.08.2023**
(21) Anmeldenummer: 18175006.8
(22) Anmeldetag: 30.05.2018
(51) Int. Cl.: A63G 7/00

(54) **RÜCKHALTEVORRICHTUNG ZUR SICHERUNG EINES BENUTZERS IN EINEM FAHRGESCHÄFT**
RETENTION DEVICE FOR SECURING A USER DURING A RIDE
DISPOSITIF DE RETENUE PERMETTANT DE SÉCURISER UN UTILISATEUR DANS UN VÉHICULE D'ATTRACTION FORAINE

(43) Veröffentlichungstag der Anmeldung: 04.12.2019
(73) Patentinhaber: Raw Tex International Establishment, 9494 Schaan (LI)
(72) Erfinder: Ryffel, Martin, 8820 Wädenswil (CH)
(74) Vertreter: ERNICKE Patent- und Rechtsanwälte PartmbB

(56) Entgegenhaltungen:
- EP-A1- 1 245 459
- EP-A1- 2 933 153
- WO-A1-99/22830
- WO-A1-2019/057357

## Beschreibung

### Gebiet der Erfindung

Die Erfindung betrifft eine Rückhaltevorrichtung zur Sicherung eines Benutzers in einem Fahrgeschäft, ein Fahrzeugelement mit einer solchen Rückhaltevorrichtung und ein Fahrgeschäft mit einem solchen Fahrzeugelement zur Verwendung in einem Vergnügungspark gemäss den unabhängigen Ansprüchen.

### Hintergrund

Fahrgeschäfte sind als beliebte Vorrichtungen in Vergnügungsparks bekannt. Dazu zählen z.B. Achterbahnen. Solche Fahrgeschäfte müssen strengen Sicherheitsbestimmungen genügen, unter anderem um die Fahrgäste gegen Herausschleudern zu sichern. Aufgrund der zum Teil hohen Beschleunigungen, auch in anderen Richtungen als zum Sitz hin, sind die Anforderungen an der Sicherung der Fahrgäste höher als beispielsweise bei Autos, bei den solche extreme Bedingungen im Normalbetrieb nicht auftreten. Daher sind solche Fahrgeschäfte mit Rückhaltevorrichtungen ausgestattet, welche die Fahrgäste sicher an der jeweiligen Struktur des Fahrgeschäfts im Sitzen oder im Stehen halten sollen.

Die Sicherheitsbedingungen, denen die Fahrgeschäfte genügen müssen, sind in der Norm EN 13814:2004 definiert. Dabei wird zwischen verschiedenen Sicherheitsstufen unterschieden.

Ein Problem bei den bereits vorhandenen Lösungen ist, dass sich die Fahrgäste potentiell mutwillig aus der Sicherung befreien können, z.B. weil sie in Panik geraten, und sich dadurch in akute Lebensgefahr begeben können. Beispielweise ist bei einem solchen Sitz durch die Konstruktion des Rückhaltebügels, der einstellbar abgesenkt werden kann, um den unterschiedlichsten Ausmaßen der Fahrgäste Rechnung zu tragen, möglich, dass der Fahrgast den Bügel nicht weit genug absenkt, so dass dieser nicht direkt auf den Oberschenkeln aufliegt. Das kann bewirken, dass der Benutzer trotz Bügel aus dem Sitz herausgeschleu~ dert werden oder sich selbst daraus befreien kann.

Die EP 1 245 459 A1 zeigt eine Rückhaltevorrichtung mit einem schwenkbaren, den Oberkörper übergreifenden zweiarmigen Bügel, mit einer in den Beckenbereich greifenden Frontstütze. Zudem ist ein Sicherheitsharnisch vorhanden, der eine Brustplatte zum Rückhalt kleinerer Passagiere aufweist, wobei die Brustplatte am einen Ende mit den Bügelarmen und am anderen Ende mit zwei abrollbaren Brustgurten verbunden ist.

Aus der WO 99/22830 A1 ist eine ähnliche Rückhaltevorrichtung mit einem schwenkbaren, den Oberkörper übergreifenden Bügel, einer in den Beckenbereich greifenden Frontstütze sowie zwei abrollbaren Schultergurten bekannt. Die Rückhaltevorrichtung kann auch einen schwenkbaren Frontbügel umfassen, der vor dem Sitz angeordnet ist und mit einem Querarm in den Beckenbereich des Passagiers greift.

Die nachveröffentlichte WO 2019/057357 A1 befasst sich mit einer Rückhaltevorrichtung, die einen schwenkbaren, hydraulisch verriegelbaren und den Oberkörper übergreifenden Bügel mit einem Oberschenkelpolster umfasst, der mit ein oder zwei abrollbaren unteren Gurten verbunden ist, die zusätzlich den abgeschwenkten Bügel in der Sicherungsstellung halten.

### Darstellung der Erfindung

Die vorliegende Erfindung hat die Aufgabe, solche Rückhaltevorrichtungen für Fahrgeschäfte sicherer zu machen, indem sie den obigen Problemen auch Rechnung tragen.

Ein erster Aspekt der Erfindung betrifft eine Rückhaltevorrichtung mit den Merkmalen von Anspruch 1.

Ein zweiter Aspekt der Erfindung betrifft ein Fahrzeugelement mit einer Rückhaltevorrichtung nach dem ersten Aspekt der Erfindung. Das Führungselement der Rückhaltevorrichtung ist ein Bügel, der an einem Rahmen des Fahrzeugelements drehbar befestigt ist. Der Bügel ist zu seiner Überführung von der Freigabeposition in die Sicherungsposition vom Benutzer oder automatisch betätigbar, derart, dass sich der Benutzer in der Freigabeposition auf oder an dem Fahrzeugelement positionieren kann und nach Überführen des Führungselements von der Freigabeposition in die Sicherungsposition des Bügels und nach der Verriegelung vom mindestens einem Gurt der Rückhaltevorrichtung im Fahrzeugelement gesichert ist.

Ein dritter Aspekt der Erfindung betrifft ein Fahrgeschäft zur Verwendung in einem Vergnügungspark, umfassend mindestens ein Fahrzeugelement nach dem zweiten Aspekt der Erfindung.

Die Rückhaltevorrichtung hach dem erste Aspekt der Erfindung kann auch für ein 4-Punkt Gurtsystem verwendet werden.

Ein Vorteil der Erfindung besteht darin, dass der Gurt für sich alleine den Benutzer sichert, ohne dass dieser dafür zusätzlich etwas tun muss. Dabei stellt sich der Gurt automatisch auf die Maße des Benutzers ein, so dass nach Einnahme der Sicherungsposition des Führungselementes und der Verriegelung der Gurte, der Gurt nicht mehr verlängert werden kann und der Benutzer zuverlässig am Fahrzeugelement fixiert ist, ohne die Möglichkeit die Fixierung beispielsweise während der Fahrt aufzuheben oder zu verstellen. Dadurch wird auch die Möglichkeit der mutwilligen Loslösung aus der Sicherung berücksichtigt und minimiert.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Sitz gemass dem zweiten Aspekt der Erfindung,
Fig. 2 und 3 einen Fahrgast, der seine Position in einem Sitz nach Fig. 1 eingenommen hat, perspektivisch von vorne und von hinten, und
Fig. 3 und 4 den Fahrgast aus Fig. 2 und 3 in einer gesicherten Position im Sitz nach Fig. 1, auch perspektivisch von vorne und von hinten.

Im Folgenden bezeichnen gleiche Bezugszeichen in den Figuren gleiche oder gleich wirkende Elemente der Erfindung.

### Weg(e) zur Ausführung der Erfindung

Ein Fahrzeugelement bzw. ein Fahrgeschäft im Sinne der vorliegenden Erfindung bezieht sich auf eine Vergnügungsattraktion in Vergnügungsparks, wie z.B. Luft- und Schiffsschaukel, Riesenrad, Achterbahn, Looping-Fahrgeschäft und dergleichen. Speziell findet die Erfindung Anwendung bei Fahrgeschäften die den Sicherheitsanforderungen im Bereich 2 and höher des Fahrgast-Rückhaltediagramms der europäischen Norm EN 13814:2004, Kapitel 6.1.6.2.4. genügen müssen.

Die Begriff "Aufrollen" und "Abrollen" beziehen sich auf eine Verlängerung bzw. eine Verkürzung der freien Länge des jeweiligen Gurtes. Die "freie Länge" ist als diejenige Länge verstanden, die für den Benutzer aktiv für die Sicherung verwendet werden kann.

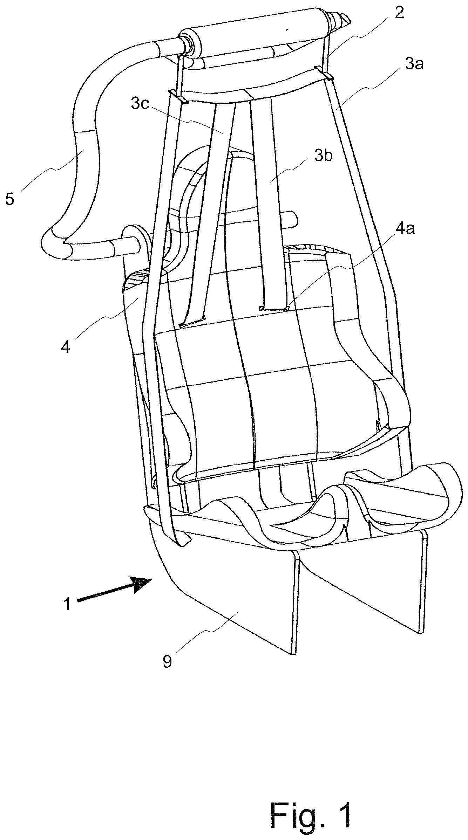

Fig. 1 zeigt ein Fahrzeugelement, in diesem Fall einen Sitz 1, gemass dem zweiten Aspekt der Erfindung in einer perspektivischen Ansicht von vorne.

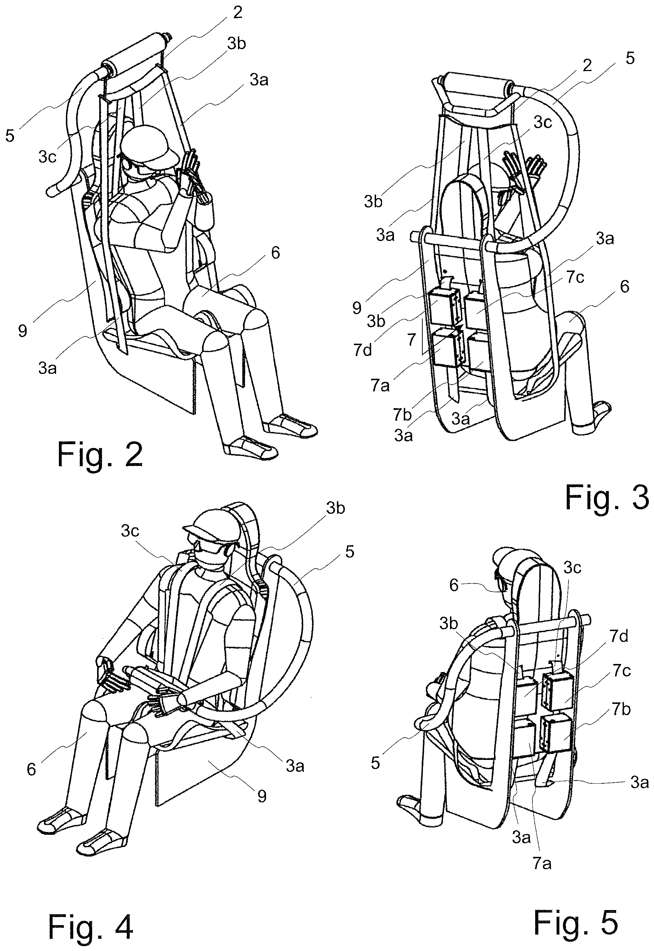

Fig. 2 und 3 zeigen einen Fahrgast, der seine Position in einem Sitz nach Fig. 1 eingenommen hat und noch nicht gesichert ist, perspektivisch von vorne und von hinten. Diese Position entspricht der Freigabeposition.

Fig. 4 und 5 zeigen den Fahrgast aus Fig. 2 und 3 in einer Sicherungsposition im Sitz nach Fig. 1, auch perspektivisch von vorne und von hinten.

Der Sitz 1 umfasst eine Sitzschale die an einer Struktur 9 des Fahrgeschäfts (nicht gezeigt) befestigt ist. In dieser beispielhaften Ausführungsform des Fahrzeugelements als Sitz 1 wird die Rückhaltevorrichtung derart angeordnet und ausgestaltet, dass sie einen Benutzer 6 (siehe Fig. 2-5) in einer Sitzposition sichert. Jedoch ist die Erfindung nicht darauf beschränkt; das Fahrzeugelement 1 kann auch eine Fahrzeuglehne sein (nicht gezeigt), deren Rückhaltevorrichtung derart angeordnet und ausgestaltet ist, dass sie den Benutzer 6 in einer Stehposition sichert. Dies ändert nichts an die wesentlichen Aspekte der Erfindung und ist lediglich mit für die Erfindung nicht relevanten baulichen Änderungen verbunden.

Ein Führungselement der Rückhaltevorrichtung des Fahrzeugelements ist in diesem Beispiel ein Bügel 5, der an einem Rahmen 9 des Sitzes 1 drehbar befestigt ist. Der Bügel 5 ist zu seiner Überführung von der Freigabeposition in die Sicherungsposition vom Benutzer 6 oder automatisch, z.B. mittels eines Stellantriebs, betätigbar, derart, dass sich der Benutzer 6 in der Freigabeposition auf dem Fahrzeugelement 1 positionieren kann und in der Sicherungsposition von den Gurten 3a, 3b, 3c der Rückhaltevorrichtung im Fahrzeugelement 1 gesichert ist. In einer Ausfuhrungsform der Erfindung kann der Bügel 5 zu einer zusätzlichen Sicherung verwendet werden, indem er auf die Oberschenkel des Benutzers 6 positionierbar und in dieser Position blockierbar ist.

Die Rückhaltevorrichtung aus Fig. 1 hat kein eigenes Bezugszeichen, da ihre Komponenten verteilt sind, was auch für die nächsten Figuren gilt.

Sie umfasst in diesem Beispiel zusatzlich zum ersten Gurt einen zweiten Gurt 3b und einen dritten Gurt 3c als Schultergurte für eine Vierpunktsicherung. Der zweite Gurt 3b und der dritte Gurt 3c sind jeweils an einem ersten Ende längenverstellbar mit einem Gurtaufrollmechanismus 7 verbunden und jeweils mit einem zweiten Ende am Beckengurt nicht lösbar befestigt, beispielsweise am Beckengurt angenäht. Der zweite und der dritte Gurt 3b, 3c sind derart vom Führungselement in der Sicherungsposition positionierbar, dass der Benutzer zusätzlich zum ersten Gurt auch mittels des zweiten und dritten Gurts 3b, 3c am Fahrzeugelement 1 gesichert ist. Der zweite und der dritte Gurt 3b, 3c sind derart ausgestaltet, dass sie in der Sicherungsposition nicht vom Benutzer lösbar ist und nur durch Lösen einer jedem Gurt 3a-3c zugeordnete Verriegelungseinheit (nicht gezeigt) im Gurtaufrollmechanismus 7 und der Bewegung des Führungselements von der Sicherungsposition in die Freigabeposition die Fixierung des Benutzers freigeben. Die Gurte 3b and 3c sind also für die Stützung des Oberkörpers und der Gurt 3a für die Stützung des Beckens des Benutzers 6 vorgesehen. In diesem Zusammenhang wird angemerkt, dass die Anzahl der Gurte für die Erfindung nicht relevant ist. Der erste Gurt 3a realisiert für sich eine Zweipunktsicherung, da dessen beide Enden am Gurtaufrollmechanismus 7 befestigt sind. Zusammen mit den beiden Schultergurten 3b, 3c bildet der Beckengurt 3a eine Vierpunktsicherung. Die erfindungsgemässe Rückhaltevorrichtung kann beispielsweise wie oben erwähnt für eine 4-Punkt Sicherung verwendet werden, bei der mehr als drei Gurte vorgesehen sind.

In Ausführungsformen umfasst der Gurtaufrollmechanismus 7 mehrere verteilte Gurtaufrolleinheiten 7a-7d zum Abrollen und Aufrollen des jeweiligen Gurts. In diesem Beispiel sind die Gurtaufrolleinheiten 7a und 7b für den ersten Gurt 3a zuständig, wahrend die Gurtaufrolleinheit 7d für den Gurt 3b bzw. die Gurtaufrolleinheit 7c für Gurt 3c vorgesehen ist. Jede Gurtaufrolleinheit ist bevorzugt exklusiv einem Ende des jeweiligen Gurts 3a-3C zugeordnet. Wie erwähnt ist eine Verriegelungseinheit zum Verhindern des Abrollens des jeweiligen Gurtes in der Sicherungsposition jeder der verteilten Gurtaufrolleinheiten 7a-7d zugeordnet. Jede Verriegelungseinheit umfasst mindestens eine Sperrklinke, die in einer verriegelten Stellung eine Verkürzung des jeweiligen Gurtes 3a-3c aber keine Verlängerung zulässt und in einer entriegelten Stellung eine Längenanpassung des jeweiligen Gurtes 3a - 3c in beiden Richtungen ermöglicht.

Die Gurtaufrolleinheiten mit den Verriegelungseinheiten 7a-7d können an der Tragestruktur 9 des Sitzes 1 oder des Fahrgeschäfts befestigt sein. Dies hängt u.a. von der Ausgestaltung des Fahrgeschäfts ab. Beispielsweise kann sie wahlweise an der Struktur des Fahrgeschäfts oder am Sitz befestigt sein, wenn der Sitz gegenüber der Struktur nicht bewegbar ist. Bei Sitzen die z.B. drehbar oder schwenkbar an der Struktur 9 befestigt sind, werden die Gurtaufrolleinheiten 7a-7d am Sitz angebracht, bevorzugt an der Rückseite der Sitzlehne, wie in Fig. 3 and 5 gezeigt. Sie umfassen bevorzugt jeweils eine Rolle zum Abrollen und Aufrollen des jeweiligen Gurts 3a-3c. Die Rollen befinden sich in dem jeweiligen Kasten in Fig. 3 und 5.

Der Gurtaufrollmechanismus 7 bzw. seine Gurtaufrolleinheiten 7a-7d mit den Verriegelungseinheiten sind derart ausgestaltet, dass sie eine Gurtstraffung der Gurte 3a-3c durchführt und die Gurte in der Sicherungsposition verriegelt. Dies sorgt dafür dass der Benutzer fest an die Sitzlehne gezogen wird, um ihn zu fixieren und damit Verletzungen zu vermeiden. Die Gurtstraffung erfolgt derart, dass der Gurtaufrollmechanismus 7 mindestens ein Federsystem oder einen Elektromotor oder eine Kombination von beiden (nicht gezeigt) umfasst, das ein weiteres Aufrollen der Gurte 3a, 3b, 3c bewirkt, bis sich eine vorgesehene Zugkraft am jeweiligen Gurt einstellt. Zu diesem Zweck beaufschlagt die Feder oder der Motor die Rolle zum Abrollen und Aufrollen des jeweiligen Gurts 3a-3c.

Die Gurte 3a, 3b, 3c sind nicht vom Gurtaufrollmechanismus 7 oder Fahrzeugelement lösbar. Selbstverständlich können sie zu Wartungszwecken entfernt werden, jedoch ist dies im Betrieb nicht möglich, um die Sicherheit des Benutzers nicht zu gefährden.

Bevorzugt wird ein Teil des Bügels aus der Sicherungsposition um den Oberkörper des Benutzers in einem Abstand von diesem in die Freigabeposition des Bügels derart bewegt, dass der Benutzer 6 das Fahrzeugelement 1 verlassen kann.

Die Rückhaltevorrichtung umfasst vorzugsweise eine Notentriegelungsfunktion. Dazu ist das Gurtaufrollmechanismus vorzugsweise derart ausgestaltet, dass die Notentriegelung, bei der die verriegelte Position deaktiviert wird, mittels eines Notentriegelungselements (nicht gezeigt) realisiert wird. Dazu wirkt das Notentriegelungselement mit dem Gurtaufrollmechanismus zusammen. Beispielsweise kann sich dabei um einen Stift handeln, der eine entsprechende mechanische Komponente im Gurtaufrollmechanismus beaufschlagt.

Es ist ferner bevorzugt, dass der erste Gurt 3a mittels eines Abstandhalters 2 mit dem Bügel 5 verbunden ist, so dass er im Wesentlichen den Abstand des Bügels zum Benutzer überwindet und an diesem anliegt.

Die Rückhaltevorrichtung umfasst eine Steuerungsvorrichtung (nicht gezeigt), welche zur Längenanpassung des jeweiligen Gurts 3a-3c die Gurtaufrolleinheiten 7a-7d derart steuert, dass diese aus einer Blockierstellung, in der keine Längenanpassung möglich ist, in eine entriegelte Stellung, in der eine Längenanpassung möglich ist, überführt werden. Die Blockierstellung entspricht der Sicherungsposition im Fahrbetrieb (Fig. 4 und 5) und die entriegelte Stellung entspricht der Freigabeposition. Es ist bevorzugt wenn alle Rückhaltevorrichtungen der Fahrzeugelemente mittels jeweiliger Steuerungen der Rückhaltevorrichtungen mit einer zentralen Steuerung des Fahrgeschäfts verbunden sind, so dass die Überführung zwischen einer Blockierstellung und einer entriegelten Stellung der jeweiligen Anpassungselemente, und umgekehrt, zentral durchführbar ist.

Die Rückhaltevorrichtung kann entweder in einem Sitz integriert sein, sie kann aber auch in einem bestehenden Fahrzeugelement nachgerüstet werden.

Ein Fahrgeschäft gemäss der Erfindung kann min destens ein erfindungsgemässes Fahrzeugelement umfassen. Das Fahrgeschäft kann aber auch mehrere Fahrzeugelemente 1 umfassen, die beispielsweise in Reihen oder hintereinander angeordnet sein können.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Rückhaltevorrichtung zur Sicherung eines Benutzers (6) in einem Fahrgeschäft, umfassend
- einen Gurtaufrollmechanismus (7) der an einem Fahrzeugelement (1) befestigbar ist,
- mindestens ein Führungselement (5), das am Fahrzeugelement (1) derart befestigbar ist, dass das Führungselement (5) zwischen einer Sicherungsposition, in der der Benutzer (6) am Fahrzeugelement (1) fixierbar ist, und einer Freigabeposition, in der die Fixierung des Benutzers (6) am Fahrzeugelement (1) aufgehoben ist, bewegbar ist,
- ein Gurtsystem (3a, 3b, 3c) umfassend mindestens einen ersten Gurt (3a),
- wobei der erste Gurt (3a) ein Beckengurt mit Zweipunktsicherung ist, der in der Sicherungsposition um den Beckenbereich des Benutzers (6) positionierbar ist und mindestens ein Ende am Gurtaufrollmechanismus (7) befestigt ist,
- wobei der Gurtaufrollmechanismus (7) mindestens eine Gurtaufrolleinheit (7a-7d) für eine Anpassung einer Länge des ersten Gurts (3a) mittels Abrollen und Aufrollen des ersten Gurts
- und eine Verriegelungseinheit zum Verhindern des Abrollens des ersten Gurtes in der Sicherungsposition hat,
- wobei der erste Gurt derart vom Führungselement in der Sicherungsposition positionierbar ist, dass der Benutzer mittels des ersten Gurts am Fahrzeugelement gesichert ist
- und wobei die Verriegelungseinheit derart ausgestaltet ist, dass sie in der Sicherungsposition nicht vom Benutzer lösbar ist und nur durch Lösen der von der Verriegelungseinheit bewirkten Verriegelung und der Bewegung des Führungselements von der Sicherungsposition in die Freigabeposition die Fixierung des Benutzers freigibt,
- wobei die Rückhaltevorrichtung eine Steuerungsvorrichtung umfasst, welche zur Längenanpassung des mindestens einen ersten Gurts (3a) die Gurtaufrolleinheit (7a) derart steuert, dass diese aus einer Blockierstellung, in der keine Längenanpassung möglich ist, in eine entriegelte Stellung, in der eine Längenanpassung möglich ist, überführt wird,
- wobei die Blockierstellung der Sicherungsposition in einem Fahrbetrieb und die entriegelte Stellung der Freigabeposition entspricht.

2. Rückhaltevorrichtung nach Anspruch 1, wobei zusätzlich zum ersten Gurt ein zweiter Gurt (3b) und ein dritter Gurt (3c) als Schultergurte für eine Vierpunktsicherung vorgesehen sind, wobei der zweite Gurt (3b) und der dritte Gurt (3c) jeweils an einem ersten Ende längenverstellbar mit dem Gurtaufrollmechanismus verbunden sind und jeweils mit einem zweiten Ende am Beckengurt befestigt sind, wobei der zweite und der dritte Gurt derart vom Führungselement in der Sicherungsposition positionierbar sind, dass der Benutzer zusätzlich zum ersten Gurt auch mittels des zweiten und dritten Gurts am Fahrzeugelement gesichert ist und wobei der zweite und der dritte Gurt derart ausgestaltet sind, dass sie in der Sicherungsposition vom Benutzer nicht lösbar ist und nur während der Bewegung des Führungselements von der Sicherungsposition in die Freigabeposition die Fixierung des Benutzers freigeben.

3. Rückhaltevorrichtung nach Anspruch 2, wobei der Gurtaufrollmechanismus (7) mehrere verteilte Gurtaufrolleinheiten (7a-7d) zur jeweiligen Längenanpassung des ersten, zweiten und dritten Gurtes umfasst, wobei jede Gurtaufrolleinheit exklusiv einem Ende des jeweiligen Gurts (3a-3c) zugeordnet ist, wobei jeder der verteilten Gurtaufrolleinheiten (7a-7d) eine Verriegelungseinheit zum Verhindern des Abrollens des jeweiligen Gurtes in der Sicherungsposition zugeordnet ist, wobei jede Verriegelungseinheit mindestens einer Sperrklinke umfasst, die in einer verriegelten Stellung eine Verkürzung des jeweiligen Gurtes (3a-3c) aber keine Verlängerung zulässt und in einer entriegelten Stellung eine Längenanpassung des jeweiligen Gurtes (3a - 3c) in beiden Richtungen ermöglicht.

4. Rückhaltevorrichtung nach Anspruch 3, wobei die Steuerungsvorrichtung zur Längenanpassung des jeweiligen Gurts (3a-3c) die Gurtaufrolleinheiten (7a-7d) derart steuert, dass diese aus einer Blockierstellung, in der keine Längenanpassung möglich ist, in einer entriegelten Stellung, in der eine Längenanpassung möglich ist, überführt werden.

5. Rückhaltevorrichtung nach Anspruch 3 oder 4, wobei der Gurtaufrollmechanismus (7) derart ausgestaltet ist, dass eine Notentriegelung bewirkt werden kann, bei der die verriegelte Stellung deaktivierbar ist.

6. Rückhaltevorrichtung nach einem der vorangehenden Ansprüche, wobei der Gurtaufrollmechanismus (7) derart ausgestaltet ist, dass er eine Gurtstraffung mindestens des ersten Gurts (3a) durchführt, wobei er bei Vorliegen eines zweiten und eines dritten Gurts nach Anspruch 3 auch zu einer Gurtstraffung des zweiten und/oder des dritten Gurts (3a) ausgestaltet ist, wobei der Gurtaufrollmechanismus (7) zur Gurtstraffung mindestens ein Federsystem oder einen Elektromotor oder eine Kombination von beiden umfasst, das ein weiteres Aufrollen des jeweiligen Gurts bewirkt, bis sich eine vorgesehene Zugkraft am jeweiligen Gurt einstellt.

7. Rückhaltevorrichtung nach einem der vorangehenden Ansprüche, wobei der mindestens eine erste Gurt nicht vom Gurtaufrollmechanismus (7) und vom Fahrzeugelement lösbar ist, wobei bei Vorliegen eines zweiten und eines dritten Gurts nach Anspruch 3 auch diese Gurte nicht vom Gurtaufrollmechanismus (7) und vom Fahrzeugelement lösbar sind.

8. Rückhaltevorrichtung nach einem der vorangehenden Ansprüche, wobei das Führungselement ein Bügel ist, wobei in der Sicherungsposition ein Teil des Bügels um den Oberkörper des Benutzers in einem Abstand von diesem bewegbar ist und in der Freigabeposition derselbe Teil des Bügels derart bewegbar ist, insbesondere drehbar ist, dass der Benutzer das Fahrzeugelement verlassen kann.

9. Rückhaltevorrichtung nach Anspruch 8, wobei der erste Gurt (3a) mittels eines flexiblen Abstandhalters (2), insbesondere mittels eines Kunstfaserbands, mit dem Bügel verbunden ist, und bei Vorliegen eines zweiten und eines dritten Gurts nach Anspruch 3 auch diese Gurte mittels des flexiblen Abstandhalters (2) mit dem Bügel verbunden sind, wodurch der Abstand des Bügels zum Benutzer überwunden ist und der oder die Gurte an diesem anliegt bzw. anliegen.

10. Rückhaltevorrichtung nach einem der vorangehenden Ansprüche, wobei der Bügel derart ausgestaltet ist, dass er in der Sicherungsposition eine zusätzliche Sicherung des Benutzers bereitstellt, insbesondere wobei der Bügel auf die Oberschenkel des Benutzers positionierbar und in dieser Position blockierbar ist.

11. Fahrzeugelement (1) mit einer Rückhaltevorrichtung nach einem der vorangehenden Ansprüche, wobei die Rückhaltevorrichtung an einem Rahmen (9) des Fahrzeugelements (1) befestigt ist, wobei das Führungselement (5) zu seiner Überführung von der Freigabeposition in die Sicherungsposition und umgekehrt vom Benutzer (6) oder automatisch betätigbar ist, derart, dass sich der Benutzer (6) in der Freigabeposition auf oder an dem Fahrzeugelement (1) positionieren kann und nach Überführen des Führungselements (5) von der Freigabeposition in die Sicherungsposition und der Verriegelung vom mindestens einen ersten Gurt (3a) der Rückhaltevorrichtung im Fahrzeugelement (1) gesichert ist.

12. Fahrzeugelement nach Anspruch 11, welches ein Fahrzeugsitz (1) ist, dessen Rückhaltevorrichtung derart angeordnet und ausgestaltet ist, dass sie den Benutzer (6) in einer Sitzposition sichert, oder welches eine Fahrzeuglehne ist, dessen Rückhaltevorrichtung derart angeordnet und ausgestaltet ist, dass sie den Benutzer (6) in einer Stehposition sichert.

13. Fahrgeschäft zur Verwendung in einem Vergnügungspark, umfassend mindestens ein Fahrzeugelement (1) nach einem der Ansprüche 11 oder 12, insbesondere wobei das Fahrgeschäft mehrere Fahrzeugelemente (1) mit Rückhaltevorrichtungen nach einem der Ansprüche 1 bis 10 umfasst, wobei alle Rückhaltevorrichtungen der Fahrzeugelemente (1) mit einer zentralen Steuerung des Fahrgeschäfts verbunden sind, so dass die Überführung zwischen der Freigabeposition und der Sicherungsposition zentral von der zentralen Steuerung des Fahrgeschäfts durchführbar ist.

## Claims

1. Restraining device for securing a user (6) in a ride, comprising
- a belt retractor mechanism (7) which can be fixed to a vehicle element (1),
- at least one guide element (5), which can be fixed to the vehicle element (1) in such a way that the guide element (5) is movable between a securing position, in which the user (6) can be fixed to the vehicle element (1), and a release position, in which the fixing of the user (6) to the vehicle element (1) is cancelled,
- a belt system (3a, 3b, 3c) comprising at least a first belt (3a),
- wherein the first belt (3a) is a lap belt with two-point securing which, in the securing position, can be positioned around the pelvic area of the user (6) and at least one end is fixed to the belt retractor mechanism (7),
- wherein the belt retractor mechanism (7) has at least one belt retractor unit (7a-7d) for adapting a length of the first belt (3a) by means of unwinding and winding up the first belt
- and a locking unit for preventing the first belt from unwinding in the securing position,
- wherein the first belt can be positioned in the securing position by the guide element in such a way that the user is secured to the vehicle element by means of the first belt
- and wherein the locking unit is configured in such a way that, in the securing position, it cannot be released by the user and releases the fixing of the user only by releasing the locking effected by the locking unit and moving the guide element from the securing element into the release position,
- wherein the restraining device comprises a control device which, to adapt the length of the at least one first belt (3a), controls the belt retractor unit (7a) in such a way that the latter is changed from a blocking position, in which no length adaptation is possible, to an unlocked position, in which length adaptation is possible,
- wherein the blocking position corresponds to the securing position during ride operation and the unlocked position corresponds to the release position.

2. Restraining device according to Claim 1, wherein, in addition to the first belt, a second belt (3b) and a third belt (3c) are provided as shoulder belts for four-point securing, wherein the second belt (3b) and the third belt (3c) are each connected by a first end to the belt retractor mechanism such that their length can be adjusted and are each fixed by a second end to the lap belt, wherein the second and the third belt can be positioned in the securing position by the guide element in such a way that the user is also secured to the vehicle element by means of the second and third belt in addition to the first belt, and wherein the second and the third belt are configured in such a way that, in the securing position, they cannot be released by the user and release the fixing of the user only during the movement of the guide element from the securing position to the release position.

3. Restraining device according to Claim 2, wherein the belt retractor mechanism (7) comprises a plurality of distributed belt retractor units (7a-7d) for the respective adaptation of the length of the first, second and third belt, wherein each belt retractor unit is assigned exclusively to one end of the respective belt (3a-3c), wherein each of the distributed belt retractor units (7a-7d) is assigned a locking unit for preventing the respective belt from unwinding in the securing position, wherein each locking unit comprises at least one ratchet which, in a locked position, permits the respective belt (3a-3c) to be shortened but not lengthened and, in an unlocked position, allows adaptation of the length of the respective belt (3a-3c) in both directions.

4. Restraining device according to Claim 3, wherein the control device for adapting the length of the respective belt (3a-3c) controls the belt retractor units (7a-7d) in such a way that these are changed from a blocking position, in which no length adaptation is possible, to an unlocked position, in which length adaptation is possible.

5. Restraining device according to Claim 3 or 4, wherein the belt retractor mechanism (7) is configured in such a way that emergency unlocking can be effected, in which the locked position can be deactivated.

6. Restraining device according to one of the preceding claims, wherein the belt retractor mechanism (7) is configured in such a way that it tautens at least the first belt (3a) wherein, when a second and a third belt are present according to Claim 3, it is also configured to tauten the second and/or the third belt (3a), wherein the belt retractor mechanism (7) for belt tautening comprises at least one spring system or an electric motor or a combination of the two, which retracts the respective belt further until an envisaged tensile force is established on the respective belt.

7. Restraining device according to one of the preceding claims, wherein the at least one first belt cannot be detached from the belt retractor mechanism (7) and from the vehicle element, wherein, when a second and a third belt are present according to Claim 3, these belts cannot be detached from the belt retractor mechanism (7) and from the vehicle element either.

8. Restraining device according to one of the preceding claims, wherein the guide element is a bow, wherein, in the securing position, part of the bow can be moved around the upper body of the user at a distance from the latter and, in the release position, the same part of the bow can be moved, in particular rotated, in such a way that the user can leave the vehicle element.

9. Restraining device according to Claim 8, wherein the first belt (3a) is connected to the bow by means of a flexible spacer (2), in particular by means of a synthetic fibre strip and, when a second and a third belt are present according to Claim 3, these belts are also connected to the bow by means of the flexible spacer (2), as a result of which the spacing of the bow from the user is overcome and the belt or the belts rests or rest on the latter.

10. Restraining device according to one of the preceding claims, wherein the bow is configured in such a way that, in the securing position, it provides additional securing of the user, in particular wherein the bow can be positioned on the upper thigh of the user and blocked in this position.

11. Vehicle element (1) having a restraining device according to one of the preceding claims, wherein the restraining device is fixed to a frame (9) of the vehicle element (1), wherein, in order to transfer it from the release position into the securing position and vice versa, the guide element (5) can be actuated by the user (6) or automatically in such a way that the user can be positioned on top of or on the vehicle element (1) in the release position and, after the guide element (5) has been transferred from the release position into the securing position and the at least one first belt (3a) has been locked, the restraining device is secured in the vehicle element (1).

12. Vehicle element according to Claim 11 which is a vehicle seat (1), the restraining device of which is arranged and configured in such a way that it secures the user (6) in a sitting position, or which is a vehicle backrest, the restraining device of which is arranged and configured in such a way that it secures the user (6) in a standing position.

13. Ride for use in an amusement park, comprising at least one vehicle element (1) according to either of Claims 11 and 12, in particular wherein the ride comprises a plurality of vehicle elements (1) having restraining devices according to one of Claims 1 to 10, wherein all the restraining devices of the vehicle elements (1) are connected to a central controller of the ride, so that the transfer between the release position and the securing position can be carried out centrally from the central controller of the ride.

## Revendications

1. Dispositif de retenue pour la sécurisation d'un utilisateur (6) dans un véhicule de manège, comprenant
- un mécanisme d'enroulement de ceinture (7) qui peut être fixé à un élément de véhicule (1),
- au moins un élément de guidage (5) qui peut être fixé à l'élément de véhicule (1) de telle sorte que l'élément de guidage (5) peut être déplacé entre une position de sécurisation, dans laquelle l'utilisateur (6) peut être fixé à l'élément de véhicule (1), et une position de libération, dans laquelle la fixation de l'utilisateur (6) à l'élément de véhicule (1) est supprimée,
- un système de ceinture (3a, 3b, 3c) comprenant au moins une première ceinture (3a),
- dans lequel la première ceinture (3a) est une ceinture abdominale avec une sécurisation en deux points, qui peut être positionnée autour de la zone abdominale de l'utilisateur (6) dans la position de sécurisation et dont au moins une extrémité est fixée au mécanisme d'enroulement de ceinture (7),
- dans lequel le mécanisme d'enroulement de ceinture (7) a au moins une unité d'enroulement de ceinture (7a-7d) pour un ajustement d'une longueur de la première ceinture (3a) au moyen d'un déroulement et d'un enroulement de la première ceinture
- et une unité de verrouillage pour empêcher le déroulement de la première ceinture dans la position de sécurisation,
- dans lequel la première ceinture peut être positionnée par l'élément de guidage dans la position de sécurisation de telle sorte que l'utilisateur est sécurisé sur l'élément de véhicule au moyen de la première ceinture
- et dans lequel l'unité de verrouillage est conçue de telle sorte qu'elle n'est pas détachable par l'utilisateur dans la position de sécurisation et qu'elle ne libère la fixation de l'utilisateur que par le détachement du verrouillage provoqué par l'unité de verrouillage et le mouvement de l'élément de guidage de la position de sécurisation à la position de libération,
- dans lequel le dispositif de retenue comprend un dispositif de commande, qui, pour l'ajustement en longueur de l'au moins une première ceinture (3a), commande l'unité d'enroulement de ceinture (7a) de telle sorte que celle-ci est transférée d'une position de blocage, dans laquelle aucun ajustement en longueur n'est possible, à une position déverrouillée, dans laquelle un ajustement en longueur est possible,
- dans lequel la position de blocage correspond à la position de sécurisation dans un mode de déplacement et la position déverrouillée à la position de libération.

2. Dispositif de retenue selon la revendication 1, dans lequel, en plus de la première ceinture, une deuxième ceinture (3b) et une troisième ceinture (3c) sont prévues en tant que ceintures d'épaule pour une sécurisation en quatre points, dans lequel la deuxième ceinture (3b) et la troisième ceinture (3c) sont reliées chacune à une première extrémité, de manière réglable en longueur, au mécanisme d'enroulement de ceinture et sont fixées chacune à une deuxième extrémité à la ceinture abdominale, dans lequel la deuxième et la troisième ceinture peuvent être positionnées par l'élément de guidage dans la position de sécurisation de telle sorte que l'utilisateur est également sécurisé à l'élément de véhicule au moyen de la deuxième et de la troisième ceinture en plus de la première ceinture, et dans lequel la deuxième et la troisième ceinture sont conçues de telle sorte qu'elles ne peuvent pas être détachées par l'utilisateur dans la position de sécurisation et ne libèrent la fixation de l'utilisateur que pendant le déplacement de l'élément de guidage de la position de sécurisation à la position de libération.

3. Dispositif de retenue selon la revendication 2, dans lequel le mécanisme d'enroulement de ceinture (7) comprend plusieurs unités d'enroulement de ceinture réparties (7a-7d) pour l'ajustement en longueur respectif des première, deuxième et troisième ceintures, dans lequel chaque unité d'enroulement de ceinture est exclusivement associée à une extrémité de la ceinture respective (3a-3c), dans lequel chacune des unités d'enroulement de ceinture réparties (7a-7d) est associée une unité de verrouillage pour empêcher le déroulement de la ceinture respective dans la position de sécurisation, dans lequel chaque unité de verrouillage comprend au moins un cliquet d'arrêt qui, dans une position verrouillée, permet un raccourcissement de la ceinture respective (3a-3c) mais pas d'allongement et, dans une position déverrouillée, permet un ajustement en longueur de la ceinture respective (3a-3c) dans les deux directions.

4. Dispositif de retenue selon la revendication 3, dans lequel le dispositif de commande pour l'ajustement en longueur de la ceinture respective (3a - 3c) commande les unités d'enroulement de ceinture (7a - 7d) de telle sorte que celles-ci sont transférées d'une position de blocage, dans laquelle aucun ajustement en longueur n'est possible, à une position déverrouillée, dans laquelle un ajustement en longueur est possible.

5. Dispositif de retenue selon la revendication 3 ou 4, dans lequel le mécanisme d'enroulement de ceinture (7) est conçu de telle sorte qu'un déverrouillage d'urgence peut être effectué, dans lequel la position verrouillée peut être désactivée.

6. Dispositif de retenue selon l'une quelconque des revendications précédentes, dans lequel le mécanisme d'enroulement de la ceinture (7) est conçu de telle sorte qu'il effectue un resserrement de ceinture d'au moins la première ceinture (3a), dans lequel, en présence d'une deuxième et d'une troisième ceinture selon la revendication 3, il est également conçu pour un resserrement de ceinture de la deuxième et/ou de la troisième ceinture (3a), dans lequel le mécanisme d'enroulement de ceinture (7) comprend, pour le resserrement de ceinture, au moins un système à ressort ou un moteur électrique ou une combinaison des deux, qui provoque un enroulement supplémentaire de la ceinture respective jusqu'à ce qu'une force de traction prévue s'établisse sur la ceinture respective.

7. Dispositif de retenue selon l'une quelconque des revendications précédentes, dans lequel l'au moins une première ceinture ne peut pas être détachée du mécanisme d'enroulement de ceinture (7) et de l'élément de véhicule, et dans lequel, en présence d'une deuxième et d'une troisième ceinture selon la revendication 3, ces ceintures ne peuvent pas non plus être détachées du mécanisme d'enroulement de ceinture (7) et de l'élément de véhicule.

8. Dispositif de retenue selon l'une quelconque des revendications précédentes, dans lequel l'élément de guidage est un arceau, dans lequel, dans la position de sécurisation, une partie de l'arceau peut être déplacée autour du torse de l'utilisateur à une distance de celui-ci et, dans la position de libération, la même partie de l'arceau peut être déplacée, notamment peut être tournée, de telle sorte que l'utilisateur peut quitter l'élément de véhicule.

9. Dispositif de retenue selon la revendication 8, dans lequel la première ceinture (3a) est reliée à l'arceau au moyen d'un espaceur flexible (2), notamment au moyen d'une bande de fibres synthétiques, et, en présence d'une deuxième et d'une troisième ceinture selon la revendication 3, ces ceintures sont également reliées à l'arceau au moyen de l'espaceur flexible (2), moyennant quoi la distance entre l'arceau et l'utilisateur peut être supprimée et la ou les ceintures s'appliquent sur celui-ci.

10. Dispositif de retenue selon l'une quelconque des revendications précédentes, dans lequel l'arceau est conçu de telle sorte que, dans la position de sécurisation, il assure une sécurisation supplémentaire de l'utilisateur, notamment dans lequel l'arceau peut être positionné sur les cuisses de l'utilisateur et peut être bloqué dans cette position.

11. Élément de véhicule (1) avec un dispositif de retenue selon l'une quelconque des revendications précédentes, dans lequel le dispositif de retenue est fixé sur un cadre (9) de l'élément de véhicule (1), dans lequel l'élément de guidage (5) peut être actionné par l'utilisateur (6) ou automatiquement pour son transfert de la position de libération à la position de sécurisation et inversement, de telle sorte que l'utilisateur (6) peut se positionner sur ou contre l'élément de véhicule (1) dans la position de libération et qu'il est sécurisé dans l'élément de véhicule (1) après le transfert de l'élément de guidage (5) de la position de libération à la position de sécurisation et le verrouillage d'au moins une première ceinture (3a) du dispositif de retenue.

12. Élément de véhicule selon la revendication 11, qui est un siège de véhicule (1) dont le dispositif de retenue est agencé et conçu de telle sorte qu'il sécurise l'utilisateur (6) dans une position assise, ou qui est un dossier de véhicule dont le dispositif de retenue est agencé et conçu de telle sorte qu'il sécurise l'utilisateur (6) dans une position debout.

13. Véhicule pour utilisation dans un parc d'attractions, comprenant au moins un élément de véhicule (1) selon l'une quelconque des revendications 11 ou 12, notamment dans lequel le véhicule de manège comprend plusieurs éléments de véhicule (1) avec des dispositifs de retenue selon l'une quelconque des revendications 1 à 10, dans lequel tous les dispositifs de retenue des éléments de véhicule (1) sont reliés à une commande centrale du véhicule de manège, de telle sorte que le transfert entre la position de libération et la position de sécurisation peut être effectué de manière centrale par la commande centrale du véhicule de manège.
